# FASCICULE DE BREVET EUROPEEN

(11) **EP 2 483 132 B1**
(45) Date de publication et mention de la délivrance du brevet: **14.01.2015**
(21) Numéro de dépôt: 10770553.5
(22) Date de dépôt: 13.09.2010
(51) Int. Cl.: B62D 5/06

(54) **PROCEDE ET DISPOSITIF DE PILOTAGE D'UN GROUPE ELECTROPOMPE DANS UN VEHICULE AUTOMOBILE, ET VEHICULE AUTOMOBILE**
VERFAHREN UND VORRICHTUNG ZUR STEUERUNG EINER ELEKTROMOTORBETRIEBENEN PUMPENEINHEIT BEI EINEM KRAFTFAHRZEUG UND KRAFTFAHRZEUG
METHOD AND DEVICE FOR CONTROLLING AN ELECTRIC MOTOR-DRIVEN PUMP UNIT IN A MOTOR VEHICLE, AND MOTOR VEHICLE

(30) Priorité: 29.09.2009 FR 0956765
(43) Date de publication de la demande: 08.08.2012
(73) Titulaire: Renault S.A.S., 92100 Boulogne-Billancourt (FR)
(72) Inventeur: CHAUVELIER, Eric, F-78320 Le Mesnil Saint Denis (FR)
(86) Numéro de dépôt international: PCT/FR2010/051899
(87) Numéro de publication internationale: WO 2011/039441

(56) Documents cités:
- WO-A1-2004/108503
- FR-A1- 2 648 776
- IJIRI W ED - JAPAN ELECTRIC VEHICLE ASSOCIATION (JEVA): "POWER STEERING SYSTEM FOR ELECTRIC VEHICLE", EVS - 13. 13TH. INTERNATIONAL ELECTRIC VEHICLE SYMPOSIUM. OSAKA, OCT. 13 - 16, 1996. SESSIONS 1A - 4H; [EVS. INTERNATIONAL ELECTRIC VEHICLE SYMPOSIUM], TOKYO, JEVA, JP, vol. SYMP. 13, 13 octobre 1996 (1996-10-13), pages 156-162, XP000687904,

## Description

### DOMAINE TECHNIQUE

La présente invention se rapporte au domaine automobile et s'intéresse en particulier à certaines directions assistées utilisées dans ce domaine, à savoir les directions assistées dans lesquelles un groupe électropompe produit une puissance hydraulique employée pour la manoeuvre des roues directrices. Plus précisément, l'invention concerne un procédé et un dispositif de pilotage d'un groupe électropompe de production de puissance hydraulique pour une assistance de la manoeuvre de roues directrices, ainsi qu'un véhicule automobile comportant un tel groupe électropompe.

Un véhicule automobile comprend des roues directrices dont le conducteur peut modifier la position angulaire afin de faire tourner le véhicule vers la droite ou vers la gauche. Pour réduire l'effort musculaire devant être déployé pour manoeuvrer de telles roues directrices en actionnant le volant de direction, une direction assistée peut équiper le véhicule automobile.

### TECHNIQUES ANTERIEURES

Dans les configurations les plus anciennes, la direction assistée est mécaniquement accouplée au vilebrequin, d'où vient la puissance qu'elle emploie pour aider la manoeuvre des roues directrices par le conducteur.

Les directions assistées à alimentation électrique sont plus récentes. Dans ces directions assistées, la puissance mécanique participant à la manoeuvre des roues directrices vient d'une transformation d'énergie électrique par un moteur électrique. Dans la direction assistée électrique dénommée telle, la puissance récupérée en sortie du moteur électrique est uniquement transmise de manière mécanique.

Une transmission hydraulique de la puissance mécanique développée par un moteur électrique peut également être prévue. Tel est le cas lorsque la direction assistée comprend un groupe électropompe, dans lequel le moteur électrique de la direction assistée entraîne une pompe de production d'une puissance hydraulique. Dès que le moteur d'entraînement du véhicule automobile est en marche, le moteur électrique du groupe électropompe entraîne la pompe, même en l'absence de manoeuvre du volant de direction. Lorsque ce volant n'est pas manoeuvré soit que le véhicule est à l'arrêt, soit qu'il se déplace en ligne droite, le groupe électropompe fonctionne à un régime ralenti, qui est toutefois assez élevé pour que la direction assistée reste instantanément opérationnelle grâce à une puissance hydraulique disponible suffisante.

### RESUME DE L'INVENTION

L'invention a au moins pour but de permettre une réduction de la consommation énergétique d'un groupe électropompe d'une direction assistée.

Selon l'invention, ce but est atteint grâce à un procédé de pilotage d'un groupe électropompe de production de puissance hydraulique pour une assistance de la manoeuvre des roues directrices d'un véhicule automobile. Dans ce procédé, on règle en continu le régime du groupe électropompe en fonction de paramètres de pilotage qui comprennent la vitesse longitudinale du véhicule automobile et au moins un paramètre reflétant une commande instantanée du conducteur du véhicule de manoeuvrer les roues directrices. De plus, on examine au moins une condition distincte de l'état instantané desdits paramètres de pilotage. Dans le cas d'une satisfaction de cette condition, on effectue l'action d'amener le régime du groupe électropompe au-dessous d'un seuil auquel la production de puissance hydraulique par le groupe électropompe est juste suffisante pour maintenir instantanément opérationnelle l'assistance de la manoeuvre des roues directrices.

On a observé qu'une manoeuvre des roues directrices d'un véhicule automobile est inutile et/ou improbable à bref délai dans certaines situations, par exemple lorsque, ce véhicule étant à l'arrêt, sa boîte de vitesse est au point mort. Dans l'invention, on tire parti de cela en réduisant le régime du groupe électropompe dans une telle situation, jusqu'à un arrêt de ce groupe électropompe ou, à tout le moins, au point que la direction assistée ne soit plus instantanément opérationnelle. On fait donc usage d'informations dont on ne tenait jusqu'alors pas compte pour piloter le groupe électropompe et dont on peut déduire qu'une manoeuvre des roues directrices du véhicule est inutile et/ou improbable à bref délai.

Lorsque le groupe électropompe fonctionne à un régime au-dessous du seuil précité, sa consommation est basse, ce qui se traduit par des économies d'énergie, ainsi que par une moindre sollicitation de la batterie alimentant le réseau électrique de bord.

Selon l'invention, ladite condition est qu'un délai prédéterminé s'est écoulé sans que les roues directrices aient été manoeuvrées de plus d'une quantité prédéterminée pendant ce délai.

Selon l'invention, ladite condition est qu'une commande du conducteur du véhicule a mis ce véhicule dans un état prédéterminé.

Selon l'invention, ladite condition est choisie parmi le fait qu'une boîte de vitesse mécanique dans la transmission de la puissance d'entraînement du véhicule est au point mort alors que le véhicule automobile est à l'arrêt et le fait qu'une boîte de vitesse automatique dans la transmission de la puissance d'entraînement du véhicule est en position stationnement.

Selon l'invention, ladite condition est qu'un moteur thermique d'entraînement du véhicule automobile est à l'arrêt.

Avantageusement, ladite action d'amener le régime du groupe électropompe au-dessous dudit seuil est annulée si le véhicule automobile est dans une configuration prédéterminée.

Avantageusement, ladite configuration prédéterminée résulte d'une commande choisie parmi la mise en marche de clignotants d'indication d'un changement de direction du véhicule automobile, une commande préparatoire à une mise en route du véhicule en marche arrière et une commande au véhicule de se mettre en mouvement.

Avantageusement, ladite configuration prédéterminée est qu'un système d'aide à la conduite du véhicule automobile a détecté un virage en avant du véhicule automobile alors que ce véhicule automobile progresse sur une route.

Avantageusement, on annule l'action d'amener le régime du groupe électropompe au-dessous dudit seuil dans le cas d'un besoin de puissance hydraulique pour la manoeuvre des roues directrices.

Avantageusement, ladite action d'amener le régime du groupe électropompe au-dessous dudit seuil est une action d'arrêter ce groupe électropompe.

L'invention a également pour objet un dispositif de pilotage d'un groupe électropompe conformement à la revendication 7.

Avantageusement, le dispositif de pilotage est conçu pour obéir à une annulation d'effectuer l'action d'amener le régime du groupe électropompe au-dessous dudit seuil, le dispositif de pilotage comprenant une interface permettant au conducteur du véhicule automobile de lui communiquer cette annulation.

Avantageusement, le dispositif de pilotage est conçu pour mettre en oeuvre un procédé tel que défini précédemment.

L'invention a encore pour objet un véhicule automobile comportant un dispositif de pilotage tel que défini précédemment.

### BREVE DESCRIPTION DES DESSINS

L'invention sera bien comprise à la lecture de la description qui va suivre, donnée uniquement à titre d'exemple et faite en se référant aux dessins annexés, parmi lesquels :
- la figure 1 est un schéma d'une direction assistée de véhicule automobile dont un groupe électropompe produit une puissance hydraulique employée pour l'assistance de la manoeuvre de roues directrices ; et
- la figure 2 est un schéma simplifié illustrant les connexions pour le cheminement de signaux entre plusieurs équipements d'un véhicule automobile et un dispositif de pilotage, selon un procédé conforme à l'invention, du groupe électropompe que possède la direction assistée représentée à la figure 1.

### MANIERE POSSIBLE DE REALISER L'INVENTION

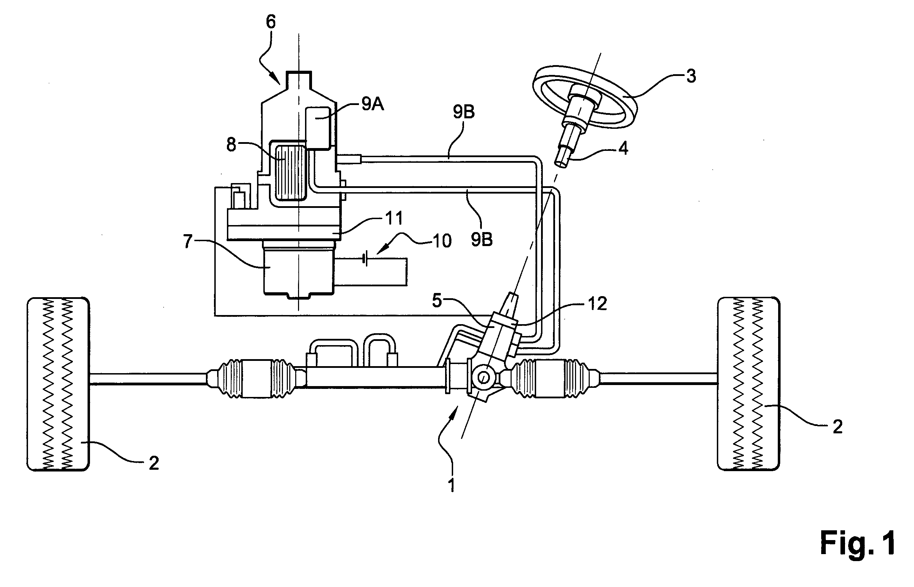

Sur la figure 1 est représentée une direction assistée **1** de manoeuvre, vers la droite ou la gauche, des deux roues directrices avant **2** d'un véhicule automobile. Un volant **3,** actionnable par le conducteur du véhicule, est accouplé à une colonne de direction **4.** Cette dernière est elle-même accouplée à l'arbre d'entrée d'un dispositif hydraulique de manoeuvre **5** connu en soi, qui augmente la puissance manuelle fournie par le conducteur sur le volant **3,** en lui ajoutant une puissance hydraulique, et qui est relié aux supports pivotants des roues directrices **2** de manière à pouvoir les manoeuvrer avec la puissance augmentée.

La puissance hydraulique additionnelle employée par le dispositif **5** est fournie par un groupe électropompe **6** connu en soi, dans lequel un moteur électrique **7** entraîne en rotation une pompe hydraulique **8.** Un circuit hydraulique en boucle fermée raccorde l'admission et le refoulement de la pompe **8** au dispositif de manoeuvre **5.** Il comprend un réservoir **9A** de stockage d'une réserve de liquide, ainsi que deux conduits **9B,** à savoir un conduit d'amenée du liquide sous pression au dispositif **5** et un conduit pour le retour de ce liquide vers le groupe électropompe **6.**

Le moteur électrique **7** est connecté dans le réseau électrique de bord, par l'accumulateur **10** duquel il est ainsi alimenté en énergie électrique.

Un dispositif programmable **11** de pilotage du fonctionnement du groupe électropompe **6** peut présenter la forme d'un microprocesseur associé à une interface et à des mémoires vive et morte. Couramment désigné par l'acronyme anglais ECU (Electronic Computer Unit), il pilote la puissance hydraulique mise à disposition par le groupe électropompe **6,** en régulant la vitesse de rotation du moteur **7,** c'est-à-dire son régime, à partir de plusieurs informations, dont une est l'angle de rotation du volant **3** dans l'exemple représenté à la figure 1 et provient d'un capteur d'angle **12.**

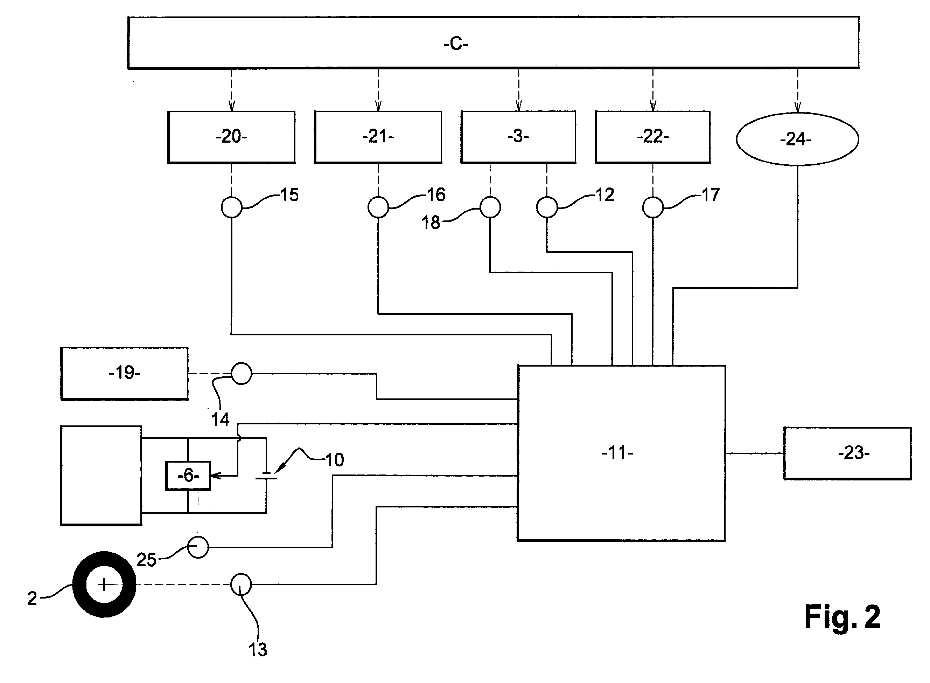

Cet angle de rotation du volant **3** n'est pas la seule donnée employée pour piloter le groupe électropompe. Les différentes informations utilisées par le dispositif de pilotage **11** lui parviennent par des connexions, dont une forme de réalisation peut comprendre un bus multiplexé, par exemple du type communément désigné par l'acronyme anglais CAN (Controller Area Network). Une architecture de telles connections selon un exemple de réalisation de l'invention est représentée à la figure 2, où la référence C désigne le conducteur du véhicule.

Sur cette figure 2, le dispositif de pilotage **11** est connectée à plusieurs capteurs, qui sont un premier capteur de vitesse de rotation **13,** un deuxième capteur de vitesse de rotation **14,** un capteur de position **15,** des capteurs d'état **16** et **17,** le capteur d'angle **12** et un capteur de couple **18.**

Le capteur **13** mesure la vitesse de rotation d'une roue **2** du véhicule automobile. La vitesse longitudinale du véhicule automobile est calculée à partir de cette vitesse de rotation. Elle peut également l'être à partir des vitesses de plusieurs roues du véhicule automobile, par exemple à partir des vitesses de toutes ses roues.

Le capteur **14** mesure la vitesse de rotation d'un moteur thermique **19** d'entraînement du véhicule automobile. Ce moteur **19** peut faire partie d'un groupe de propulsion hybride. Son état au sens de savoir s'il est en marche ou s'il est à l'arrêt est déduit de la mesure de vitesse effectuée par le capteur **14.**

Le capteur **15** détecte la position de la pédale d'accélérateur **20** ou celle de la pédale de frein.

Le capteur **16** détecte l'état de la boîte de vitesse **21** dans la transmission qui communique la puissance d'entraînement du véhicule aux roues motrices. En particulier, il est à même de signaler que cette boîte de vitesse est au point mort, s'il s'agit d'une boîte de vitesse mécanique ou manuelle, ou que la boîte de vitesse est en position parking, s'il s'agit d'une boîte de vitesse automatique.

Le capteur **17** donne une information sur l'état de la commande **22** des clignotants gauche et des clignotants droits. Plus précisément, cette information indique si les clignotants gauches et droits sont tous à l'arrêt ou si les clignotants gauches sont en marche ou bien encore si les clignotants droits sont en marche.

Optionnel, le capteur de couple **18** génère une information qui peut être combinée avec la mesure de l'angle de rotation du volant **3,** d'une manière connue en soi, et qui est le couple appliqué sur le volant **3** par le conducteur.

Dans l'exemple représenté, le dispositif de pilotage **11** peut également recevoir des données d'un système d'aide à la conduite **23,** à même de détecter un virage en avant du véhicule automobile, sur une route où progresse ce véhicule.

Le dispositif de pilotage **11** peut encore recevoir une commande d'un bouton **24** ou d'une autre interface équivalente permettant au conducteur ***C*** de lui communiquer une instruction.

Le dispositif de pilotage **11** régule le régime du groupe électropompe **6** à partir d'une mesure de sa vitesse de rotation, cette mesure provenant d'un capteur de vitesse **25.**

Dans un mode de fonctionnement standard, le groupe électropompe **6** est piloté de manière à fournir une puissance hydraulique suffisante pour que puissent être satisfaits les besoins instantanés de l'assistance pour la manoeuvre des roues directrices. D'une manière connue en elle-même, on détermine alors en continu la puissance hydraulique à faire fournir au groupe électropompe **6** en fonction de paramètres de pilotage qui sont la vitesse longitudinale instantanée du véhicule automobile et au moins un paramètre reflétant une commande instantanée du conducteur du véhicule de manoeuvrer les roues directrices. Le paramètre reflétant une telle commande peut être la vitesse de rotation du volant **3,** auquel cas il peut être déduit de la mesure d'angle effectuée par le capteur **12.** D'une manière toujours connue en elle-même, le calcul pour déterminer la puissance à faire fournir au groupe électropompe **6** peut également utiliser le couple mesuré par le capteur **18.**

Lorsque le conducteur ***C*** actionne le volant **3,** l'assistance pour la manoeuvre des roues directrices **2** est sollicitée et consomme de l'énergie hydraulique. Les besoins que doit satisfaire le groupe électropompe **6** sont alors importants, si bien que le dispositif de pilotage **11** fait tourner ce groupe électropompe **6** à un régime élevé. Le régime ou vitesse de rotation du groupe électropompe **6** est d'autant plus élevé que la manoeuvre des roues directrices **2** vers la gauche ou la droite est importante. Dans le cas d'un braquage complet des roues directrices **2** à partir de la position médiane, c'est-à-dire pour un déplacement en ligne droite, ce régime peut être de l'ordre de 5000 tr/mn par exemple. A titre de comparaison, le régime du groupe électropompe **6** peut être de l'ordre 3500 tr/mn lorsqu'à lieu une faible manoeuvre du volant **3.**

Le régime du groupe électropompe est régulé autour d'une valeur sensiblement constante, par exemple autour de 2500 tr/mn, lorsque le volant n'est pas manoeuvré mais que rien n'indique qu'il ne risque pas de l'être d'un instant à l'autre. Il s'agit d'un premier régime de ralenti. L'assistance pour la manoeuvre des roues directrices **2** reste opérationnelle, dans la mesure où elle peut immédiatement répondre à une demande grâce à la puissance hydraulique disponible fournie à un niveau suffisamment élevé par le groupe électropompe lorsque celui-ci est au premier régime de ralenti. En d'autres termes, la valeur de ce premier régime de ralenti est supérieure ou égale au seuil auquel la production de puissance hydraulique par le groupe électropompe est juste suffisante pour maintenir instantanément opérationnelle l'assistance de la manoeuvre des roues directrices.

Parallèlement, le dispositif de pilotage **11** surveille plusieurs conditions afin de pouvoir détecter si au moins l'une d'elles viendrait à être satisfaite. La satisfaction de l'une quelconque de ces conditions signifie qu'on se trouve dans une situation particulière où une manoeuvre des roues directrices du véhicule automobile est inutile et/ou improbable à bref délai.

Si l'une des conditions surveillées est soudain satisfaite alors que le groupe électropompe **6** est au premier régime de ralenti, on passe à un mode veille en réduisant le régime de ce groupe électropompe pour l'amener au-dessous du seuil auquel la production de puissance hydraulique est juste suffisante pour maintenir instantanément opérationnelle l'assistance de la manoeuvre des roues directrices. Tant que la condition est satisfaite, le groupe électropompe **6** peut être maintenu à un deuxième régime de ralenti dans lequel sa vitesse de rotation est régulée autour d'une vitesse de consigne inférieure au seuil précité. Par exemple, cette vitesse de consigne peut être de l'ordre de 800 tr/mn. Elle peut ne pas avoir la même valeur selon que le véhicule est ou non à l'arrêt. En particulier, la vitesse de consigne dans le deuxième régime de ralenti peut être plus élevée lorsque le véhicule est en mouvement que lorsqu'il est à l'arrêt.

En variante, la réduction du régime du groupe électropompe **6** dans le cas où une condition surveillée devient satisfaite peut consister en un arrêt de ce groupe **6,** notamment si la satisfaction de cette condition intervient alors que le véhicule automobile est à l'arrêt.

En d'autres termes, en mode veille, le groupe électropompe **6** peut être au deuxième régime de ralenti ou bien arrêté (régime égal à zéro). Dans un cas comme dans l'autre, son régime est inférieur au seuil précité.

Ainsi qu'on l'aura compris, l'assistance pour la manoeuvre des roues directrice **2** ne peut pas instantanément être efficace faute de puissance hydraulique disponible en quantité suffisante, lorsque le mode veille est appliqué.

L'une des conditions surveillées, c'est-à-dire une condition dont la satisfaction fait passer en mode veille, peut être qu'un délai prédéterminé s'est écoulé sans que les roues directrices aient été manoeuvrées de plus d'une quantité prédéterminée pendant ce délai. Lorsque le volant **3** n'a pas été manoeuvré depuis quelque temps, il est probable soit que le conducteur du véhicule à l'arrêt soit dans une situation d'attente, soit que le véhicule roule sur un tronçon de route rectiligne de grande longueur.

Une autre condition parmi les conditions surveillées peut être que, dans le cas où la boîte de vitesse **21** est une boîte mécanique ou manuelle, cette boîte de vitesse **21** est au point mort alors que le véhicule automobile est à l'arrêt. Dans le cas d'une boîte de vitesse automatique, cette condition est que la boîte de vitesse **21** est en position stationnement. Dans un cas comme dans l'autre, son examen par le dispositif de pilotage **11** utilise l'information délivrée par le capteur d'état **16.** Tant que la boîte de vitesse **21** est au point mort ou en position stationnement, une mise en route du véhicule ne peut avoir lieu dans un court délai puisqu'elle requiert au préalable la mise en prise d'une vitesse ou de la marche arrière.

Le véhicule automobile peut être équipé de la fonction « start & stop » encore appelée « stop & go », grâce à laquelle son moteur thermique s'arrête automatiquement dans certaines situations d'attente à l'arrêt, telles qu'une situation d'attente à un feu rouge. Lorsque tel est le cas, une condition dont la satisfaction fait passer en mode veille peut être que le moteur thermique **19** d'entraînement du véhicule automobile est à l'arrêt, ce que l'information en provenance du capteur **14** permet d'examiner. Lorsqu'une fonction « start & stop » arrête momentanément le moteur thermique **19,** une mise en route du véhicule ne pourra intervenir qu'après un redémarrage de ce moteur thermique, ce qui laisse quelque temps pour élever de nouveau le régime du groupe électropompe **6.**

Toutes les conditions exposées ci-dessus ou seulement certaines d'entre elles ou même uniquement l'une d'elles peuvent être surveillées par le dispositif de pilotage **11,** selon le mode de réalisation choisi. D'autres conditions peuvent également l'être.

Lorsque plus aucune des conditions surveillées n'est satisfaite ou lorsqu'une action sur le volant **3** a lieu, le mode veille est abandonné et le régime du groupe électropompe est augmenté.

En actionnant le bouton **24,** le conducteur ***C*** peut commander un abandon prématuré du mode veille ou empêcher que ce mode veille soit appliqué même lorsque l'une des conditions surveillées est satisfaite.

Le dispositif de pilotage **11** est à même de détecter des configurations dont on peut déduire une forte probabilité de manoeuvre imminente des roues directrices **2.** Lorsqu'une telle configuration est détectée, le dispositif de pilotage commande un abandon prématuré du mode veille et l'adoption du premier régime de ralenti.

L'une des configurations pouvant amener le dispositif de pilotage **11** à faire abandonner le mode veille au profit du premier régime de ralenti est un fonctionnement des clignotants gauche ou des clignotants droit, dont la mise en marche est normalement préparatoire à une manoeuvre du véhicule ou à un démarrage avec un changement de direction. Lorsque le dispositif de pilotage **11** surveille dans ce contexte l'état des clignotants gauches et droits, il emploie à cet effet les informations fournies par le capteur d'état **17.**

Une autre configuration pouvant amener le dispositif de pilotage **11** à faire abandonner le mode veille au profit du premier régime de ralenti est que le conducteur ***C*** exécute une commande préparatoire à une mise en route du véhicule en marche arrière, ce qui est le cas lorsqu'il passe la marche arrière dans la boîte de vitesse **21.** Encore une autre configuration pouvant amener le dispositif de pilotage **11** à faire abandonner le mode veille au profit du premier régime de ralenti est que le conducteur ***C*** exécute une commande pour mettre en mouvement le véhicule, par exemple en appuyant sur la pédale d'accélérateur **20,** ce qui peut être détecté à partir des données fournies par le capteur **15.**

Une autre configuration pouvant amener le dispositif de pilotage **11** à faire abandonner le mode veille au profit du premier régime de ralenti est que le système **23** d'aide à la conduite du véhicule automobile a détecté un virage en avant du véhicule automobile alors que ce véhicule automobile progresse sur une route.

Selon le mode de réalisation retenu, chacune des configurations exposées ci-dessus ou seulement certaines d'entre elles ou même uniquement l'une d'elles peuvent amener le dispositif de pilotage **11** à faire abandonner prématurément le mode veille au profit du premier régime de ralenti.

## Revendications

1. Procédé de pilotage d'un groupe électropompe (6) de production de puissance hydraulique pour une assistance de la manoeuvre des roues directrices (2) d'un véhicule automobile, dans lequel on règle en continu le régime du groupe électropompe (6) en fonction de paramètres de pilotage qui comprennent la vitesse longitudinale du véhicule automobile et au moins un paramètre reflétant une commande instantanée du conducteur du véhicule de manoeuvrer les roues directrices (2), **caractérisé en ce que**, dans ce procédé, on examine au moins une condition distincte de l'état instantané desdits paramètres de pilotage parmi lesquelles :
- un délai prédéterminé s'est écoulé sans que les roues directrices (2) aient été manoeuvrées de plus d'une quantité prédéterminée pendant ce délai,
- une commande du conducteur du véhicule a mis ce véhicule dans un état prédéterminé,
- une boîte de vitesse mécanique (21) dans la transmission de la puissance d'entraînement du véhicule est au point mort alors que le véhicule automobile est à l'arrêt ou qu'une boîte de vitesse automatique (21) dans la transmission de la puissance d'entraînement du véhicule est en position stationnement,
- un moteur thermique (19) d'entraînement du véhicule automobile est à l'arrêt,
et, dans le cas d'une satisfaction de cette condition, on effectue l'action d'amener le régime du groupe électropompe (6) au-dessous d'un seuil auquel la production de puissance hydraulique par le groupe électropompe (6) est juste suffisante pour maintenir instantanément opérationnelle l'assistance de la manoeuvre des roues directrices (2).

2. Procédé de pilotage selon la revendication précédente, **caractérisé en ce que** ladite action d'amener le régime du groupe électropompe (6) au-dessous dudit seuil est annulée si le véhicule automobile est dans une configuration prédéterminée.

3. Procédé de pilotage selon la revendication 2, **caractérisé en ce que** ladite configuration prédéterminée résulte d'une commande choisie parmi la mise en marche de clignotants d'indication d'un changement de direction du véhicule automobile, une commande préparatoire à une mise en route du véhicule en marche arrière et une commande au véhicule de se mettre en mouvement.

4. Procédé de pilotage selon l'une quelconque des revendications 2 et 3, **caractérisé en ce que** ladite configuration prédéterminée est qu'un système (23) d'aide à la conduite du véhicule automobile a détecté un virage en avant du véhicule automobile alors que ce véhicule automobile progresse sur une route.

5. Procédé de pilotage selon l'une quelconque des revendications précédentes, **caractérisé en ce qu'**on annule l'action d'amener le régime du groupe électropompe (6) au-dessous dudit seuil dans le cas d'un besoin de puissance hydraulique pour la manoeuvre des roues directrices (2).

6. Procédé de pilotage selon l'une quelconque des revendications précédentes, **caractérisé en ce que** ladite action d'amener le régime du groupe électropompe (6) au-dessous dudit seuil est une action d'arrêter ce groupe électropompe (6).

7. Dispositif de pilotage d'un groupe électropompe (6) de production de puissance hydraulique pour une assistance de la manoeuvre des roues directrices (2) d'un véhicule automobile, ce dispositif de pilotage étant conçu pour régler en continu le régime du groupe électropompe (6) en fonction de paramètres de pilotage qui comprennent la vitesse longitudinale du véhicule automobile et au moins un paramètre reflétant une commande instantanée du conducteur du véhicule de manoeuvrer les roues directrices, **caractérisé en ce que** ce dispositif de pilotage est conçu pour examiner au moins une condition distincte de l'état instantané desdits paramètres de pilotage, parmi lesquelles :
- un délai prédéterminé s'est écoulé sans que les roues directrices (2) aient été manoeuvrées de plus d'une quantité prédéterminée pendant ce délai,
- une commande du conducteur du véhicule a mis ce véhicule dans un état prédéterminé,
- une boîte de vitesse mécanique (21) dans la transmission de la puissance d'entraînement du véhicule est au point mort alors que le véhicule automobile est à l'arrêt ou qu'une boîte de vitesse automatique (21) dans la transmission de la puissance d'entraînement du véhicule est en position stationnement,
- un moteur thermique (19) d'entraînement du véhicule automobile est à l'arrêt,
et pour, dans le cas d'une satisfaction de cette condition, effectuer l'action d'amener le régime du groupe électropompe (6) au-dessous d'un seuil auquel la production de puissance hydraulique par le groupe électropompe (6) est juste suffisante pour maintenir instantanément opérationnelle l'assistance de la manoeuvre des roues directrices (2).

8. Dispositif de pilotage selon la revendication 7, **caractérisé en ce qu'**il est conçu pour obéir à une annulation d'effectuer l'action d'amener le régime du groupe électropompe (6) au-dessous dudit seuil, le dispositif de pilotage comprenant une interface (24) permettant au conducteur du véhicule automobile de lui communiquer cette annulation.

9. Dispositif de pilotage selon l'une quelconque des revendications 7 et 8, **caractérisé en ce qu'**il est conçu pour mettre en oeuvre un procédé selon l'une quelconque des revendications 1 à 6.

10. Véhicule automobile, **caractérisé en ce qu'**il comporte un dispositif de pilotage (11) selon l'une quelconque des revendications 7 à 9.

## Patentansprüche

1. Verfahren zum Steuern einer Gruppe von Elektropumpen (6) für die Erzeugung von Hydraulikleistung für die Unterstützung der Betätigung der gelenkten Räder (2) eines Kraftfahrzeugs, wobei der Betrieb der Gruppe (6) von Elektropumpen ununterbrochen als Funktion von Steuerparametern reguliert wird, die die Längsgeschwindigkeit des Kraftfahrzeugs und wenigstens einen Parameter, der einen momentanen Befehl des Fahrers des Fahrzeugs zum Betätigen der gelenkten Räder(2) wiedergibt, umfassen, **dadurch gekennzeichnet, dass** in diesem Verfahren wenigstens eine bestimmte Bedingung des momentanen Zustands der Steuerparameter untersucht wird, die Folgendes umfassen:
- eine vorgegebene Bedingung verstreicht, ohne dass die gelenkten Räder (2) während dieser Verzögerung um mehr als einen vorgegebenen Betrag betätigt worden sind,
- ein Befehl des Fahrers des Fahrzeugs hat dieses Fahrzeug in einen vorgegebenen Zustand versetzt,
- ein mechanisches Getriebe (21) in der Kraftübertragung der Antriebsleistung des Fahrzeugs ist an einem Totpunkt, während das Kraftfahrzeug in Ruhe ist oder während ein Automatikgetriebe (21) in der Kraftübertragung der Antriebsleistung des Fahrzeugs in der stationären Stellung ist,
- ein Verbrennungsmotor (19) für den Antrieb des Kraftfahrzeugs ist in Ruhe,
und im Fall der Erfüllung dieser Bedingung der Vorgang bewirkt wird, den Betrieb der Gruppe (6) von Elektropumpen unter einen Schwellenwert zu bringen, bei dem die Erzeugung von Hydraulikleistung durch die Gruppe (6) von Elektropumpen gerade ausreicht, um die Unterstützung der Betätigung der gelenkten Räder (2) momentan in Betrieb zu halten.

2. Steuerverfahren nach dem vorhergehenden Anspruch, **dadurch gekennzeichnet, dass** der Vorgang, den Betrieb der Gruppe (6) von Elektropumpen unter den Schwellenwert zu bringen, beendet wird, wenn das Kraftfahrzeug in einer vorgegebenen Konfiguration ist.

3. Steuerverfahren nach Anspruch 2, **dadurch gekennzeichnet, dass** sich die vorgegebene Bedingung aus einem Befehl ergibt, der unter dem Einschalten der Fahrtrichtungsanzeiger zum Anzeigen einer Richtungsänderung des Kraftfahrzeugs, einem vorbereitenden Befehl zum Anfahren des Fahrzeugs im Rückwärtsgang und einem Befehl an das Fahrzeug, sich in Bewegung zu setzen, gewählt wird.

4. Steuerverfahren nach einem der Ansprüche 2 und 3, **dadurch gekennzeichnet, dass** die vorgegebene Konfiguration darin besteht, dass ein System (23) für die Unterstützung des Führens des Kraftfahrzeugs eine Straßenkrümmung vor dem Kraftfahrzeug detektiert hat, während sich das Kraftfahrzeug auf einer Route vorwärts bewegt.

5. Steuerverfahren nach einem der vorhergehenden Ansprüche, **dadurch gekennzeichnet, dass** der Vorgang, den Betrieb der Gruppe (6) von Elektropumpen unter den Schwellenwert zu bringen, dann beendet wird, wenn ein Bedarf an Hydraulikleistung für die Betätigung der gelenkten Räder (2) besteht.

6. Steuerverfahren nach einem der vorhergehenden Ansprüche, **dadurch gekennzeichnet, dass** der Vorgang, den Betrieb der Gruppe (6) von Elektropumpen unter den Schwellenwert zu bringen, ein Vorgang ist, diese Gruppe (6) von Elektropumpen anzuhalten.

7. Vorrichtung zum Steuern einer Gruppe (6) von Elektropumpen für die Erzeugung von Hydraulikleistung für eine Unterstützung der Betätigung der gelenkten Räder (2) eines Kraftfahrzeugs, wobei diese Steuervorrichtung dafür ausgelegt ist, ununterbrochen den Betrieb der Gruppe (6) von Elektropumpen als Funktion von Steuerparametern zu regulieren, die die Längsgeschwindigkeit des Kraftfahrzeugs und wenigstens einen Parameter, der einen momentanen Befehl des Fahrers des Fahrzeugs zum Betätigen der gelenkten Räder wiedergibt, umfassen, **dadurch gekennzeichnet, dass** diese Steuervorrichtung dafür ausgelegt ist, wenigstens eine bestimmte Bedingung des momentanen Zustands der Steuerparameter zu untersuchen, die Folgendes umfassen:
- eine vorgegebene Verzögerung verstreicht, ohne dass die gelenkten Räder (2) während dieser Verzögerung um mehr als einen vorgegebenen Betrag betätigt worden sind,
- ein Befehl des Fahrers des Fahrzeugs hat dieses Fahrzeug in einen vorgegebenen Zustand versetzt,
- ein mechanisches Getriebe (21) in der Kraftübertragung der Antriebsleistung des Fahrzeugs ist an einem Totpunkt, während das Kraftfahrzeug in Ruhe ist, oder ein Automatikgetriebe (21) in der Kraftübertragung der Antriebsleistung des Fahrzeugs ist in einer stationären Stellung,
- ein Verbrennungsmotor (19) für den Antrieb des Kraftfahrzeugs ist in Ruhe,
und im Fall einer Erfüllung dieser Bedingung den Vorgang zu bewirken, den Betrieb der Gruppe (6) von Elektropumpen unter einen Schwellenwert zu bringen, bei dem die Erzeugung von Hydraulikleistung für die Gruppe (6) von Elektropumpen gerade ausreicht, um die Unterstützung der Betätigung der gelenkten Räder (2) momentan betriebsfähig zu halten.

8. Steuervorrichtung nach Anspruch 7, **dadurch gekennzeichnet, dass** sie dafür ausgelegt ist, einem Widerruf des Bewirkens des Vorgangs, den Betrieb der Gruppe (6) von Elektropumpen unter den Schwellenwert zu bringen, zu folgen, wobei die Steuervorrichtung eine Schnittstelle (24) umfasst, die ermöglicht, dem Fahrer des Kraftfahrzeugs diesen Widerruf mitzuteilen.

9. Steuervorrichtung nach einem der Ansprüche 7 und 8, **dadurch gekennzeichnet, dass** sie dafür ausgelegt ist, ein Verfahren nach einem der Ansprüche 1 bis 6 auszuführen.

10. Kraftfahrzeug, **dadurch gekennzeichnet, dass** es eine Steuervorrichtung (11) nach einem der Ansprüche 7 bis 9 umfasst.

## Claims

1. Method for driving an electric pump unit (6) for producing hydraulic power to assist with the turning of the steered wheels (2) of a motor vehicle, wherein the speed of the electric pump unit (6) is adjusted continuously depending on driving parameters which comprise the longitudinal velocity of the motor vehicle and at least one parameter that reflects an instantaneous command by the driver of the vehicle to turn the steered wheels (2), **characterized in that**, in this method, at least one distinct condition of the instantaneous state of said driving parameters is examined, said conditions including the following:
- a predetermined time has passed without the steered wheels (2) being turned by more than a predetermined amount during this time,
- a command by the driver of the vehicle has put this vehicle into a predetermined state,
- a mechanical gearbox (21) in the transmission of the driving power of the vehicle is in neutral while the motor vehicle is at a standstill, or an automatic gearbox (21) in the transmission of the driving power of the vehicle is in park,
- a combustion engine (19) for driving the motor vehicle is switched off,
and, if this condition has been met, the speed of the electric pump unit (6) is brought below a threshold at which the production of hydraulic power by the electric pump unit (6) is just enough to keep the turning assistance for the steered wheels (2) operational at any time.

2. Driving method according to the preceding claim, **characterized in that** said action of bringing the speed of the electric pump unit (6) below said threshold is cancelled if the motor vehicle is in a predetermined configuration.

3. Driving method according to Claim 2, **characterized in that** said predetermined configuration results from a command selected from the starting of indicators for indicating a change in direction of the motor vehicle, a preliminary command for operating the vehicle in reverse gear, and a command for the vehicle to start moving.

4. Driving method according to either of Claims 2 and 3, **characterized in that** said predetermined configuration is that a motor vehicle driver assistance system (23) has detected a bend in front of the motor vehicle while this motor vehicle is travelling along a road.

5. Driving method according to any one of the preceding claims, **characterized in that** the action of bringing the speed of the electric pump unit (6) below said threshold is cancelled if there is a need for hydraulic power for turning the steered wheels (2).

6. Driving method according to any one of the preceding claims, **characterized in that** said action of bringing the speed of the electric pump unit (6) below said threshold consists in stopping this electric pump unit (6).

7. Device for driving an electric pump unit (6) for producing hydraulic power to assist with the turning of the steered wheels (2) of a motor vehicle, this driving device being designed to continuously adjust the speed of the electric pump unit (6) depending on driving parameters which comprise the longitudinal velocity of the motor vehicle and at least one parameter that reflects an instantaneous command by the driver of the vehicle to turn the steered wheels, **characterized in that** this driving device is designed to examine at least one distinct condition of the instantaneous state of said driving parameters, said conditions including the following:
- a predetermined time has passed without the steered wheels (2) being turned by more than a predetermined amount during this time,
- a command by the driver of the vehicle has put this vehicle into a predetermined state,
- a mechanical gearbox (21) in the transmission of the driving power of the vehicle is in neutral while the motor vehicle is at a standstill, or an automatic gearbox (21) in the transmission of the driving power of the vehicle is in park,
- a combustion engine (19) for driving the motor vehicle is switched off,
and, if this condition has been met, to bring the speed of the electric pump unit (6) below a threshold at which the production of hydraulic power by the electric pump unit (6) is just enough to keep the turning assistance for the steered wheels (2) operational at any time.

8. Driving device according to Claim 7, **characterized in that** it is designed to obey a cancellation of the action of bringing the speed of the electric pump unit (6) below said threshold, the driving device comprising an interface (24) that allows the driver of the motor vehicle to communicate this cancellation thereto.

9. Driving device according to either of Claims 7 and 8, **characterized in that** it is designed to implement a method according to any one of Claims 1 to 6.

10. Motor vehicle, **characterized in that** it comprises a driving device (11) according to any one of Claims 7 to 9.
